Europäisches Patentamt

(19) European Patent Office

Office européen des brevets

(11) Publication number: **0 058 654**
**B1**

(12) **EUROPEAN PATENT SPECIFICATION**

(45) Date of publication of patent specification: **08.05.85**

(21) Application number: **82850023.1**

(22) Date of filing: **12.02.82**

(51) Int. Cl.⁴: **A 01 G 9/14, E 04 B 1/32**

(54) **Building.**

(30) Priority: **16.02.81 SE 8101013**

(43) Date of publication of application:
**25.08.82 Bulletin 82/34**

(45) Publication of the grant of the patent:
**08.05.85 Bulletin 85/19**

(84) Designated Contracting States:
**CH DE FR GB IT LI SE**

(56) References cited:
**GB-A- 984 297**
**US-A-4 136 408**
**US-A-4 180 950**

(73) Proprietor: **Hedén, Carl-Göran**
**Solna Kyrkväg 11**
**S-171 64 Solna (SE)**

(72) Inventor: **Hedén, Carl-Göran**
**Solna Kyrkväg 11**
**S-171 64 Solna (SE)**

(74) Representative: **Rosenquist, Holger et al**
**H Albihns Patentbyra AB Box 7664**
**S-103 94 Stockholm (SE)**

Courier Press, Leamington Spa, England.

EP 0 058 654 B1

## Description

The present invention relates to a building comprising a dome shell of identical rhombic surfaces, which is attached to a base with vertical surfaces.

In recent years, interest has increased in economical and energy-efficient small-scale cultivation and created a need for simple, inexpensive and highly efficient greenhouses suitable for more or less do-it-yourself construction. Also, a revised legislation in Sweden has facilitated the construction of small buildings with a floor area of less than 10 m².

Similar buildings have been designed before. US—A—4,180,950 describes a dome made up of identical, rhombic surfaces on a framework of standardized parts.

The present invention intends to provide small buildings, especially high-efficiency greenhouses, at low cost. According to the invention, the greenhouses are constructed of a small number of standard components which are designed for very inexpensive manufacture and minimum transport volume. The standard components are made so that assembly is simple and does not require special tools, and minimizing the risk of error in assembly. The materials can be inexpensive and rugged and can be used to provide good insulation. The incident light energy can be used efficiently, and heat losses are brought down by virtue of the fact that the surface is small in relation to the enclosed volume. In order to be usable in various contexts, the geometric form has been made aesthetically pleasing so as to permit connection to other structures and expansion by coupling together of a plurality of units. The functional flexibility is great as regards the cultivation itself covering everything from conventional cultivation to fluid film cultivation; insulation, either single or double shells with reinforced insulation effect; screening covering everything between simple reflective sheets to advanced solar collectors; and heat storage in the form of simple stone magazines up to advanced deep-heat storage.

The building according to the invention is constructed on a frame of identical struts joined by standardized hubs, each hub consisting of a support disc provided with radial slots, each support disc mounted on a post provided with slots at one end thereof accommodating support wings, which hubs tie together alternatively three or five struts, the ends of which are provided with notches fitting into the support disc at a radial slot, the struts being fastened to the support wings and that said struts are provided with slots and cavities into which a skin of plastic sheeting, glass, sheets of various kinds, etc. constituting the rhombic surfaces are mounted.

The structures according to the invention are intended both for land-based and marine-based cultivation taking into consideration utilization of available space and irrigation problems in dry climates.

According to the present invention, all of these purposes are achieved with a simple dome geometry based on equilateral rhombic wall sections. The structure is also applicable to clerestories, storehouses, halls etc. and will be described in detail with reference to the accompanying figures, of which

Fig. 1 is a perspective sketch of a dome according to the invention,

Fig. 2 shows a strut in the building frame,

Fig. 3 shows a hub for joining the struts,

Fig. 4 shows the end of a strut according to Fig. 2 in perspective,

Fig. 5 is a cross section through the strut in Fig. 2,

Fig. 6 shows a rhombic grid for affixing the double plastic sheeting,

Fig. 7 shows a water-based greenhouse according to the invention as seen from above, and

Fig. 8 is a section along the line VIII—VIII in Fig. 7.

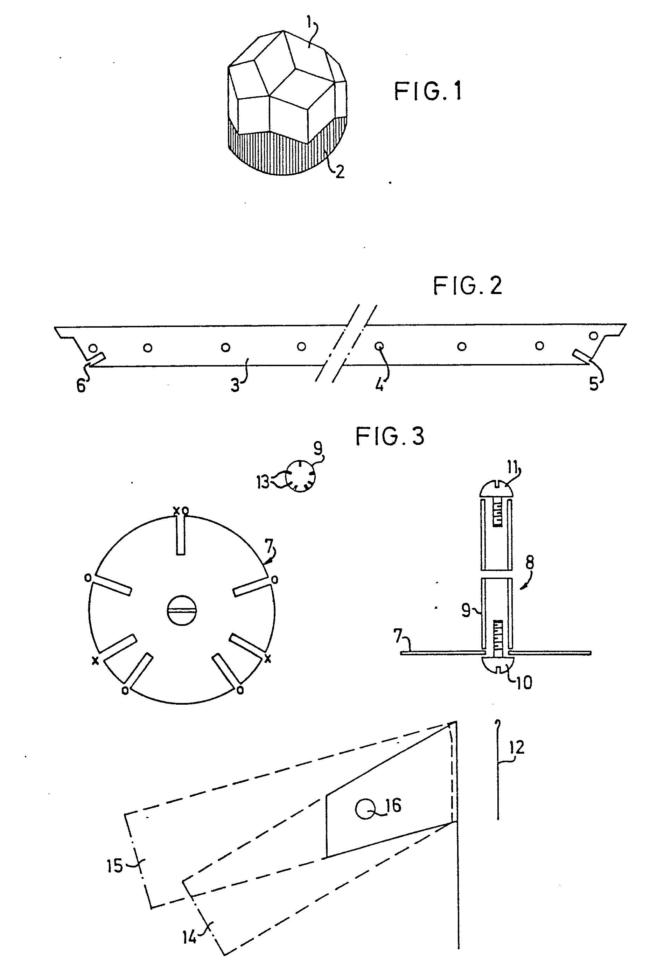

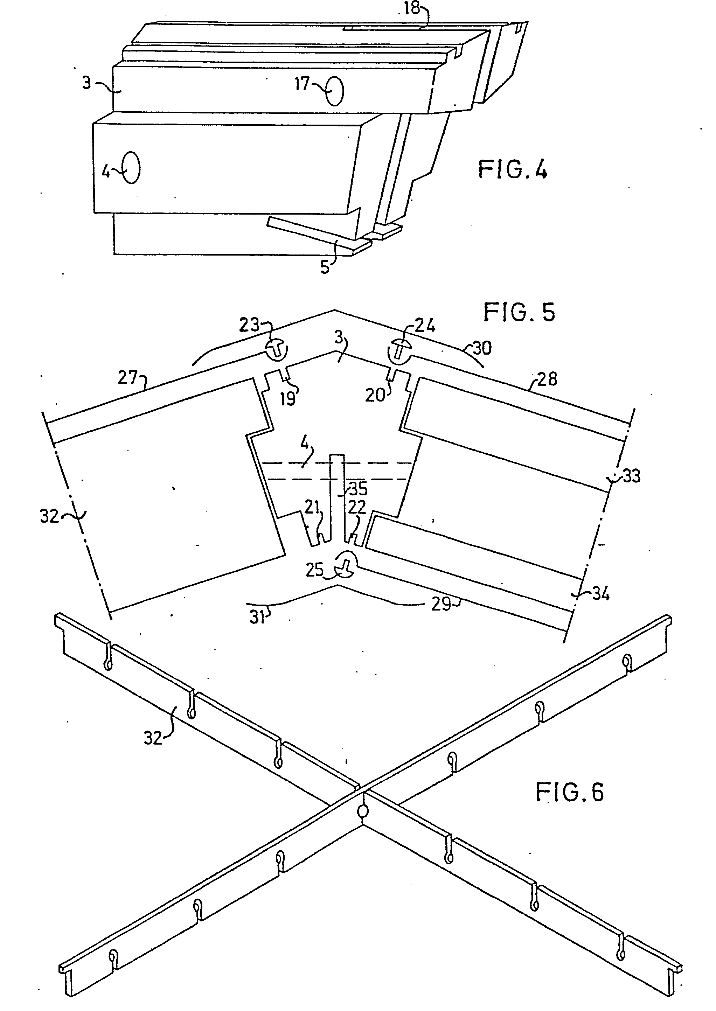

The dome shown in Fig. 1 consists of 20 identical wall sections 1, 10 of which are vertical and are fixed to a base 2. The framework of the dome is constructed of 45 identical struts 3. The struts can be manufactured of pressure-creosoted wood, which combines both strength and relatively poor heat transference. Such materials as iron, fiber-reinforced plastic etc. can of course be considered. Air ducts 4 are drilled into the strut and the ends are provided with notches and slots 5, 6 so that one end 5 can be coupled to a support disc 7 of a hub 8 with five wings, and the other end 6 to a corresponding support disc in a hub with three wings. The hubs are made of steel, but aluminum or another strong material can also be used. Each hub 8 is, as shown in Fig. 3 built around a post 9 provided with seven longitudinal slots positioned to correspond to the slots in the disc 7 when it is fixed in the proper position at one end of the post with a screw 10. A screw 11 is screwed into the other end of the post to anchor three or five support wings 12 which are pushed down into the slots 13 in the post. These depositions for said wings are indicated in Fig. 3 with o for hubs with five wings and x for hubs with three wings. The dashed lines in Fig. 3 show position 14 for a strut in the former case and position 15 for a strut in the latter case. The support wing 12 is provided at its upper edge with a bend so that it can be anchored securely in the slots 13 in the post 9. For fixing the strut to the support wing, there is a screw hole 16. A corresponding screw hole 17 in the strut is shown in Fig. 4 which also shows the slot 18 into which the support wing is inserted into the strut 3. The various slots and notches are best revealed in Fig. 5. Narrow T-profiles 23, 24, 25, 26, preferably of plastic, can be pressed into narrow slots 19, 20, 21, 22 to anchor exterior 27, 28 or interior 29 skins or sheets. Airtight connections are assured by strips of tape 30, 31. Notches are made in the strut which permit fitting of doors for example, or an alternative covering of glass or fiberboard, and a rhombic grid 32 made of strips of plexiglass for example. The grid supports and fixes the exterior and the interior plastic sheeting to prevent condensation and increase the insulation capacity by maintaining a slight underpressure of dry air between the sheets. With thinner rhombic grids 33, 34 between the sheets, it is also possible to define a space for insulation sheeting. With the aid of cords in special slots 35, such insulation sheets can be pulled out from rollers placed along the diagonals of the rhombi. The edges of said sheets can be provided with magnetic strips which lock the sheets to corresponding sheets or plates along the struts when the sheet is completely extended.

A structure of this type with a single dome skin, without reflecting insulation membranes, can serve as a simple greenhouse which is ventilated by lifting up the dome as needed. In a more advanced embodiment, the dome is built with double sheets and planters on a circular rock magazine through which the air is drawn by means of a fan from the top of the dome via a plastic hose through the magazine. The cultivation system can be developed further by using manually operated insulation membranes on the inside of a double-membrane wall. Further improvement is obtained by a slight underpressure and dry air, insulation membranes between the sheets and electric operation. It is also possible to use artificial lighting at night. By circulating the air in this embodiment through tubes in a heat magazine containing water, it is possible to make a bench for fluid film cultivation. Finally, this system can be combined with a pump for deep-heat accumulation.

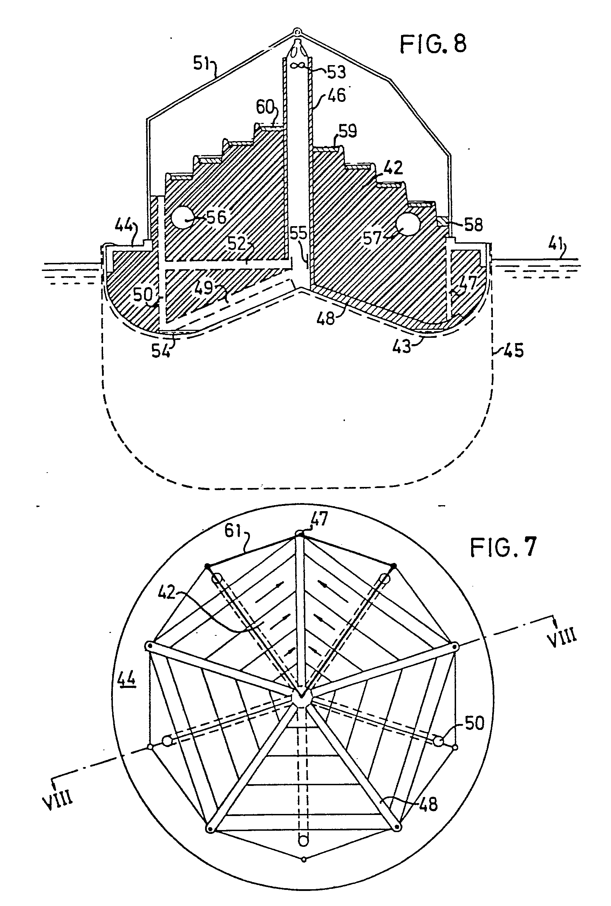

An embodiment which particularly emphasizes water conservation and which is therefore of interest in dry climates is shown in Figs. 7 and 8. A raft or large body of expanded polystyrene 42 floats on the water surface 41. Its underside is covered with polyethylene sheeting 43 which is fixed to the edge of a platform or a deck 44 of wood around the edge of the raft 42. A large net 45 hangs from the wooden deck down under the entire raft. A large pipe 46 is disposed through the polystyrene body and serves both as a ventilation pipe and as a point of attachment when the entire arrangement is to be lifted up out of the water by a crane. The arrangement can then be placed on five legs inserted in vertical pipes 47 fixed to five heavy arms 48 extending from the central, vertical pipe 46.

The central pipe 46 communicates with radial ducts 49 formed between the polyethylene sheeting 43 and gutters cut in the bottom surface of the polystyrene-body. At the periphery, the ducts 49 communicate with other vertical ducts 50 which open to the inside of the dome 51. The vertical pipe 46 also communicates with horizontal ducts 52 which form a shunt to the vertical ducts 50 at the periphery. The air which is pressed down through the central pipe by a fan 53 can thus proceed by two paths back to the dome, either over the bottom membrane whereby the humidity in the air condenses and forms a fresh water reservoir 54, or through the duct 52 whereby no heat is lost. A damper 55, which can be moved up and down under the influence of a temperature sensor at the top of the dome, functions as a geared valve and control the temperature.

Condensed fresh water is returned to the medium by a pump 56. Nutrient solution is collected from the inclined growing trough 59 at the bottom 58 and is returned by a pump 57 to the highest point 60. The arrows indicate the liquid flow which becomes a fluid film when flowing over the structured surface of the inclined troughs. The troughs 59 can be made in five segments of fiberglass-reinforced plastic, and the polystyrene body can be divided in the same way in five like segments, as illustrated by the solid line 61 in Fig. 7. The functioning of the system is clearly described in the description, but it can be operated in various ways. Harvesting can be done in situ but it is also possible to lift the troughs out of the dome with a crane, wash the plants and process them automatically. The power for the operation of fans, pumps and lighting can be obtained, especially for remote non-industrialized areas, from diesel generators or Sterling engines, which also produce pure carbon dioxide.

**Claims**

1. Building comprising a dome shell (1, 51) of identical, rhombic surfaces, which is attached to a base (2, 42) with vertical surfaces, characterized in that it is constructed on a frame of identical struts (3) joined by standardized hubs (8) each hub consisting of a support disc (7) provided with radial slots, each support disc mounted on a post (9) provided with slots (13) at one end thereof accommodating support wings (12), which hubs tie together alternatively three or five struts, the ends of which are provided with notches (5, 6) fitting into the support disc (7) at a radial slot, the struts being fastened to the support wings (12), and that said struts (3) are provided with slots and cavities (19—22) into which a skin (27—29) of plastic sheeting, glass, sheets of various kinds, etc. constituting the rhombic surfaces is mounted.

2. Building according to Claim 1, characterized in that the skin (27—29) consists of exterior and interior plastic sheets with an intermediate spacer grid (32), and that underpressure is maintained in between the plastic sheets.

3. Building according to Claim 1 or 2, characterized in that reflecting and insulating sheets between the exterior and interior sheets (27—29) are arranged to be pulled out (35) from rollers mounted in the diagonals to the rhombic wall surfaces.

4. Building according to Claim 3, characterized in that said insulating sheets are provided along their edges with magnetic strips which when the insulating sheets are rolled out make complete contact with the corresponding bars or magnetic strips along the struts (3).

5. Building according to one of the preceding claims, characterized in that the base (42) consists of a foamed plastic block, designed to float in water, carrying a plurality of inclined growing troughs (59), and with a central pipe (46) for ventilation and circulation of moisture and water between the dome (51) and a sheet 43) arranged beneath the plastic block.

6. Building according to Claim 5, characterized in that a pump (56) is disposed to circulate water from a fresh-water reservoir (54) on the bottom sheet (43) to the interior of the dome (51), and that another pump (57) is disposed to return nutrient solution from the bottom (58) of the growing troughs (59) to their highest point (60).

**Revendications**

1. Bâtiment comportant une coque de dôme (1, 51) de surfaces rhombiques identiques, fixée à une base (2, 42) à surfaces verticales, caractérisé en ce qu'il est construit sur une charpente d'entretoises identiques (3) réunies par des moyeux standards (8), chaque moyeu étant constitué par un disque de support (7) présentant des fentes radiales, chaque disque de support étant monté sur un poteau (9) présentant à l'une de ses extrémités des fentes (13) recevant des ailes de support (12), moyeux qui relient alternativement les unes aux autres trois ou cinq entretoises, dont les extrémités présentent des encoches (5, 6) d'emboîtant dans le disque de support (7) au niveau d'une fente radiale, les entretoises étant fixées aux ailes de support (12), et en ce que lesdites entretoises (3) présentent des fentes et des cavités (19—22) dans lesquelles un revêtement (27—29) de feuille en plastique, de verre, de feuilles de genres divers etc. constituant les surfaces rhombiques est monté.

2. Bâtiment selon la revendication 1, caractérisé en ce que le revêtement (27—29) est constitué par des feuilles de plastique extérieure et intérieure avec présence d'une grille d'entretoisement intermédiaire (32), et en ce qu'on maintient une dépression entre les feuilles de plastique.

3. Bâtiment selon la revendication 1 ou 2, caractérisé en ce que des feuilles réfléchissantes et isolantes interposées entre les feuilles intérieure et extérieure (27—29) sont agencées pour être extraites par traction (35) de rouleaux montés suivant les diagonales des surfaces de mur rhombiques.

4. Bâtiment selon la revendication 3, caractérisé en ce que lesdites feuilles isolantes sont munies le long de leurs bords de bandes magnétiques qui lorsque les feuilles isolantes sont enroulées entrent en contact total avec des barres ou bandes magnétiques correspondantes longeant les entretoises (3).

5. Bâtiment selon l'une des revendications précédentes, caractérisé en ce que la base (42) est constituée par un bloc de plastique expansé, destiné à flotter dans l'eau, portant une pluralité de gouttières de croissance inclinées (59), et muni d'un tuyau central (46) pour l'aération et la circulation d'humidité et d'eau entre le dôme (51) et une feuille (43) disposée sous le bloc de plastique.

6. Bâtiment selon la revendication 5, caractérisé en ce qu'une pompe (56) est disposée pour faire circuler de l'eau provenant d'un réservoir d'eau fraîche (54) sur la feuille inférieure (43) jusqu'à l'intérieur du dôme (51) et en ce qu'une autre pompe (57) est disposée de façon à renvoyer de la solution nutritive de la base (58) des gouttières de croissance (59) jusqu'au point le plus haut (60) de celles-ci.

**Patentansprüche**

1. Gebäude mit einer Gewölbehaut (1, 51) aus identischen rhombischen Flächen, die an einem Grundbau (2, 42) mit vertikalen Flächen befestigt ist, dadurch gekennzeichnet, daß es auf einem Rahmen aus identischen Streben (3) zusammengebaut ist, welche mittels standarisierten Naben (8) verbunden sind, die jeweils aus einer Stützscheibe (7) bestehen, die mit radialen Schlitzen versehen ist, wobei jede Stützscheibe an einem Pfosten (9) angebracht ist, der an einem Ende mit Stützflügel (12) aufnehmenden Schlitzen (13) versehen ist, wobei von den Naben alternativ drei oder fünf Streben zusammengehalten werden, deren Enden mit Schlitzen (5, 6) versehen sind, in welche die Stützscheibe (7) an einem radialen Schlitz paßt, wobei ferner die Streben an den Stützflügeln (12) befestigt sind, und daß die Streben (3) mit Nuten und Hohlräumen (19—22) versehen sind, in welchen eine die rhombischen Flächen bildende Haut (27—29) aus Kunststoffolie, Glas und Blechen verschiedener Arten u.dgl. befestigt ist.

2. Gebäude nach Anspruch 1, dadurch gekennzeichnet, daß die Haut (27—29) aus äußeren und inneren Kunststoffbahnen mit einem mittleren Abstandsgitter (32) besteht und daß zwischen den Kunststoffbahnen ein Unterdruck aufrechterhalten ist.

3. Gebäude nach Anspruch 1 oder 2, dadurch gekennzeichnet, daß zwischen den äußeren und den inneren Bahnen (27—29) Spiegel- und Isolierbahnen so angeordnet sind, daß sie von Rollen abgezogen (35) werden können, die in den Diagonalen der rhombischen Wandflächen angebracht sind.

4. Gebäude nach Anspruch 3, dadurch gekennzeichnet, daß die Isolierbahnen an ihren Rändern mit Magnetstreifen versehen sind, welche, wenn die Isolierbahnen abgerollt sind, vollständigen Kontakt mit den zugeordneten Leisten oder magnetischen Streifen entlang den Streben (3) herstellen.

5. Gebäude nach einem der vorangehenden Ansprüche, dadurch gekennzeichnet, daß der Grundbau (42) auf einem geschäumten Kunststoffblock besteht, welcher für das Schwimmen in Wasser gestaltet ist und eine Mehrzahl von geneigten Wuchströgen (59) trägt, und mit einem Zentralrohr (26) zur Ventilation und Zirkulation von Feuchtigkeit und Wasser zwischen dem Gewölbe (51) und einer Folie (43) unter dem Kunststoffblock versehen ist.

6. Gebäude nach Anspruch 5, dadurch gekennzeichnet, daß eine Pumpe (56) für das Zirkulieren von Wasser aus einem Frischwasserbehälter (54) an der Bodenfolie (43) zu dem Inneren des Gewölbes (51) angeordnet ist und daß eine andere Pumpe (57) zur Rückführung von Nährlösung von dem Boden (58) der Wuchströge (59) zu ihrer höchsten Stelle (60) angeordnet ist.

FIG. 1

FIG. 2

FIG. 3

0 058 654

FIG.4

FIG.5

FIG.6

2

FIG. 8

FIG. 7